# EUROPEAN PATENT SPECIFICATION

(11) **EP 4 352 981 B1**
(45) Date of publication and mention of the grant of the patent: **19.03.2025**
(21) Application number: 22735223.4
(22) Date of filing: 07.06.2022
(51) Int. Cl.: H04W 4/44, G08G 1/017, G06V 20/52, G06V 40/16, G06V 40/20, G07C 9/37, G08G 1/01, G08G 1/04, H04N 7/18

(54) **IDENTIFICATION BASED ON A LOCATION OF A MOBILE COMMUNICATIONS DEVICE**
IDENTIFIZIERUNG AUF DER BASIS DES STANDORTS EINER MOBILEN KOMMUNIKATIONSVORRICHTUNG
IDENTIFICATION BASÉE SUR UN EMPLACEMENT D'UN DISPOSITIF DE COMMUNICATION MOBILE

(30) Priority: 07.06.2021 GB 202108131
(43) Date of publication of application: 17.04.2024
(73) Proprietor: CellXion Ltd, London WC1V 7HP (GB)
(72) Inventor: TIMSON, Anthony, London WC1V 7HP (GB)
(74) Representative: EIP
(86) International application number: PCT/GB2022/051424
(87) International publication number: WO 2022/258957

(56) References cited:
- JP-A- 2018 061 114
- US-A1- 2015 294 514
- US-A1- 2016 343 252
- PRATAP KUMAR SAHU ET AL: "DuRT: Dual RSSI Trend Based Localization for Wireless Sensor Networks", IEEE SENSORS JOURNAL, IEEE, USA, vol. 13, no. 8, 1 August 2013 (2013-08-01), pages 3115 - 3123, XP011519597, ISSN: 1530-437X, DOI: 10.1109/JSEN.2013.2257731

## Description

### Technical Field

The present invention relates to the identification of a person or vehicle associated with a mobile communications device. The invention has particular, but not exclusive, relevance to the identification of a vehicle using an automatic number plate recognition (ANPR) camera, or the identification of a person using a closed-circuit television (CCTV) camera and facial recognition.

### Background

Applications of image recognition or computer vision include processing images captured by a camera to identify a person or vehicle of interest. For example, ANPR cameras are used to identify vehicles for traffic monitoring purposes, speed limit enforcement, and for enforcing payments on toll roads. In another example, CCTV cameras are used with facial recognition software to identify a person of interest, such as a person entering a restricted area.

In cases where several people or vehicles appear at a similar location at a similar time, it can be challenging to isolate a particular person or vehicle of interest.

JP 2018/061114 discusses a method to specify a person in a video photographed from a multi-view point to monitor his/her behaviour by being combined with a sensor that is vague about specifying a person. In a monitoring device, an acquisition part acquires a plurality of videos photographed from different places within a monitoring range at the same point in time, and sensor data by identifying a person h within the monitoring range, a training part generates training data obtained by combining positions of the same person h reflecting in the respective videos with sensor data obtained by detecting the person h acquired at the same time, an estimation part calculates an estimation value of the sensor data at the positions of the person reflecting in the reflecting the respective continuous videos acquired in time series on the basis of the training data, a specification part specifies identification information of the person on the basis of a time series change in similarity between the estimation value and the acquired sensor data, and a determination part determines identification information having a large number of the same overlapping persons as identification information of the same overlapping person in the case that the positions of the person reflecting in the respective videos are converted into positions within the monitoring range.

US 2016/0294514 discusses systems and methods of identification and automation of devices using a beacon. A system includes a beacon, an automation device, and a server. The beacon is configured to transmit a signal to the automation device in response to entering a defined geographic zone. The automation device is configured to receive the signal from the beacon, transmit, in response to receiving the signal, the signal to the server, receive an identification of a person possessing the beacon from the server, and activate an automation feature, wherein the automation feature uses the identification of the person possessing the beacon. An automation feature may include, but is not limited to, a video camera, a display device, or a stereo.

US 2016/0343252 discusses a method of identifying a vehicle-borne transmitter emitting an interfering signal over a predefined frequency band. The method comprises monitoring the predefined frequency band at a first location to identify an emission of an interfering signal from a passing vehicle. If an interfering signal is detected, the method further comprises capturing a first image of the passing vehicle to enable an identity of the passing vehicle to be determined.

The article "DuRT: Dual RSSI Trend Based Localization for Wireless Sensor Networks", Sahu et al, IEEE SENSORS JOURNAL, IEEE, USA, vol. 13, no. 8, 1 August 2013, pages 3115-3123, discusses an RSSI-based localization scheme that considers the trend of RSSI values obtained from beacons to estimate the position of sensor nodes. Through applying polynomial modeling on the relationship between received RSSI and distance, the authors are able to locate the maximum RSSI point on the anchor trajectory. Using two such trajectories, the sensor position can be determined by calculating the intersection point of perpendiculars passing through the maximum RSSI point on each trajectory. In addition, the authors devised schemes to improve the localization method to perform under a variety of cases such as single trajectory, and unavailability of RSSI trends.

### Summary

According to a first aspect, there is provided a system for use in identifying a person or vehicle carrying a mobile communications device. The system includes: a transmitter arranged to transmit a beacon signal for reception by the mobile communications device; a timing entity communicable with the mobile communications device via a base station apparatus, the timing entity being arranged to receive a plurality of measurement reports from the mobile communications device, each received measurement report indicating a received signal strength of the beacon signal by the mobile communications device; and determine a capture time in dependence on the plurality of measurement reports indicating a relative peak measurement, among the plurality of measurement reports, of the beacon signal by the mobile communications device; and a camera arranged to capture an image at the determined capture time, for use in identifying the person or vehicle. The camera is positioned relative to the transmitter such that the image captured at the determined capture time contains the person or vehicle.

By making the capture time dependent on the measurement report indicating the peak measurement of the beacon signal, the system can ensure that the image is captured shortly after the person or vehicle has crossed a region of peak intensity of the beacon signal, allowing the person or vehicle to be identified on the basis of the associated mobile communications device, even when multiple candidates are in the vicinity of the camera.

The transmitter may be arranged to transmit the beacon signal beam across a footpath or roadway, and the camera may be arranged to capture images of people and/or vehicles travelling on the footpath or roadway.

In examples, the system is arranged to store device identification information relating to one or more devices of interest. The timing entity is arranged to determine that the mobile communications device is a device of interest using the stored device identification information, and determine the capture time further in dependence on said determination that the mobile communications device is a device of interest. In some situations, only persons or vehicles associated with particular devices, particular groups of devices, or devices having particular characteristics, are of interest. In such situations, it is advantageous for the identification process to be triggered only when such devices are detected. For example, a device may be designated as a device of interest based on certain activity being detected involving that device.

The system may include an image processor arranged to process the captured image to generate identification data for identifying the person or vehicle. In the case of a vehicle, the camera may be an automatic number plate recognition (ANPR) camera with associated circuitry for generating identification data indicative of a number plate of a vehicle. In the case of a person, the camera may be a closed circuit television (CCTV) camera, and the system may include functionality to perform facial recognition to generate identification data for identifying the person.

In examples, the timing entity is arranged to trigger the camera to capture the image in dependence on the measurement report. In this way, the camera may capture images only when devices of interest pass through the beacon signal, resulting in efficient use of the camera and memory for storing images and/or identification data.

In other examples, the camera is arranged to capture a stream of images each having a respective time stamp, and the system includes an image processor arranged to generate respective identification data for at least some of the images in the stream of images and store the respective identification data for said at least some of the images in association with the respective time stamps of those image. The system is arranged to identify first identification data for identifying the person or vehicle from the stored identification data by matching the determined capture time with one of the stored time stamps.

In other examples, the image is a first image, the camera is arranged to capture a stream of images each having a respective time stamp, and the timing entity is arranged to identify the first image from the captured stream of images by matching the determined capture time with a time stamp of one of the images within the captured stream of images.

Capturing a stream of timestamped images may be a function of an existing camera system such as a CCTV or ANPR system, allowing the present system to be implemented with minimal modifications to the existing camera system.

The transmitter may be a simplex device and is not required to have any functionality beyond transmitting the beacon signal. In particular, the transmitter need not have any capability to process a wireless signal from the mobile communication device, or to transmit any signal other than the beacon signal to the mobile communication device. The transmitter can therefore be a simple, inexpensive device in comparison with a base station of a mobile communications network.

The transmitter may include a directional antenna arranged to transmit the beacon signal as a beacon signal beam, resulting in a well-defined and narrow peak in beacon signal measurements as the mobile communications device crosses the beam. This improves the precision by which a person or vehicle can be identified, even when candidate persons or vehicles are close to one another and/or travelling at a high speed.

In some examples where the transmitter includes a direction antenna, the transmitter is a first transmitter in a first location comprising a first directional antenna arranged to transmit a first beacon signal beam in a first direction, and the system further includes a second transmitter at a second location different from the first location and comprising a second directional antenna arranged to transmit a second beacon signal beam in a second direction different from the first direction, thereby to generate an overlap of the first and second beacon signal beams. The timing entity is arranged to determine the capture time in dependence on the measurement report received from the mobile communications device indicating peak measurements of the first beacon signal beam and the second beacon signal beam by the mobile communications device. Making the capture time depend on measurements of both transmitters results in the camera only being triggered when the person or vehicle passes through the overlap region, which avoids erroneous triggering that might otherwise occur if the person or vehicle incidentally passes through one of the beacons signal beams whilst not being in view of the camera. This may be particularly advantageous where the system is deployed in a built-up area and used to identify a large number of persons or vehicles. By making the overlap region corresponds to a choke point through which the person or vehicle is forced to travel, the person or vehicle may be unable to avoid being identified.

In examples, the transmitter is a first transmitter and the measurement report is a first measurement report, and the system includes one or more further transmitters arranged to transmit respective further beacon signals. The timing entity is arranged to determine the capture time further in dependence on whether measurement reports are received from the mobile communications device prior to, or after, the receiving of the first measurement report, indicating measurements of the further beacon signals transmitted by the one or more further transmitters. Making the capture time dependent on the further measurement reports allows the person or vehicle to be identified in dependence on a direction of travel of the person or vehicle. For example, the further transmitters may be arranged upstream and/or downstream of the first transmitter with respect to a particular direction of travel, allowing the timing entity to determine the direction of travel based on an order in which measurements are reported from the first transmitter and the further transmitters.

According to a second aspect, there is provided a method of identifying a person or vehicle carrying a mobile communications device. The method transmitting a beacon signal for reception by the mobile communications device using a transmitter, receiving a plurality of measurement reports from the mobile communications device indicating a peak measurement of the beacon signal by the mobile communications device, each received measurement report indicating a received signal strength of the beacon signal by the mobile communications device, determining a capture time in dependence on the plurality of measurement reports indicating a relative peak measurement, among the plurality of measurement reports, of the beacon signal by the mobile communications device, and capturing, by a camera, an image at the determined capture time for use in identifying the person or vehicle. The camera is positioned relative to the transmitter such that the image captured at the determined capture time contains the person or vehicle.

Further features and advantages of the invention will become apparent from the following description of preferred embodiments of the invention, given by way of example only, which is made with reference to the accompanying drawings.

### Brief Description of the Drawings

Figure 1 shows a first example of a system for identifying a vehicle in dependence on a location of a mobile communications device;
Figure 2 shows illustrative beam characteristics for a directional antenna;
Figure 3 shows an illustrative graph of beacon signal measurements by a mobile communications device in Figure 1;
Figure 4 shows a second example of a system for identifying a vehicle in dependence on a location of a mobile communications device;
Figure 5 shows an illustrative graph of beacon signal measurements by a mobile communications device in Figure 4;
Figure 6 shows a third example of a system for identifying a vehicle in dependence on a location of a mobile communications device;
Figures 7 and 8 show illustrative graphs of beacon signal measurements by mobile communications devices in Figure 6;
Figure 9 shows a fourth example of a system for identifying a vehicle in dependence on a location of a mobile communications device; and
Figure 10 shows an example of a system for identifying a person in dependence on a location of a mobile communications device.

### Detailed Description

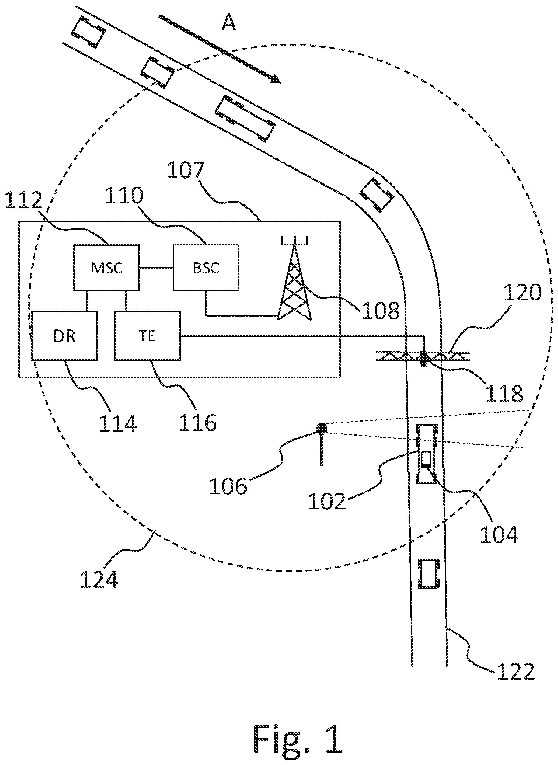

Figure 1 schematically shows a system for identifying a vehicle 102 in dependence on a presence of a mobile communications device 104 located within the vehicle 102. The mobile communications device 104 is a cellular device capable of wireless communication according to one or more mobile communication standards. The system includes a measurement beacon 106 and a set of networked components forming a network 107, including a base transceiver station (BTS) 108, a base station controller (BSC) 110, a mobile switching station (MSC) 112, a device register 114 and a timing entity 116. The network 107 in this example is an independently introduced network and is not required provide access to a public mobile land network (PLMN). The timing entity 116 is communicatively coupled to an automatic number plate recognition (ANPR) camera 118. The BTS 108, the BSC 110 and the MSC 112 conform to the GSM mobile communication standards.

The ANPR camera 118 is supported by a gantry 120 over a roadway 122. The field of view of the ANPR camera 118 faces along the roadway 122 such that the ANPR camera can be used to identify vehicles driving along the roadway 122 and passing under the gantry 120. The roadway 122 in this example is a one-way roadway along which vehicles are only permitted to drive in a direction A as indicated by the labelled arrow. Although in this example the ANPR camera 118 faces in the direction A so as to capture images of rear number plates of vehicles driving on the roadway 122, the ANPR camera 118 could alternatively face opposite to the direction A so as to capture images of front number plates of vehicles driving on the roadway 122.

The measurement beacon 106 is disposed to the side of the roadway 122, within the region of coverage of the BTS 108 (shown by the dashed circle 124), such that vehicles driving on the roadway 122 pass the measurement beacon 106 shortly after passing under the gantry 120. The measurement beacon 106 is a transmitter which, in this example, includes a directional antenna for transmitting a beacon signal beam across a portion of the roadway 122 closest to the measurement beacon 106, as indicated by the dashed lines emanating from the measurement beacon 106.

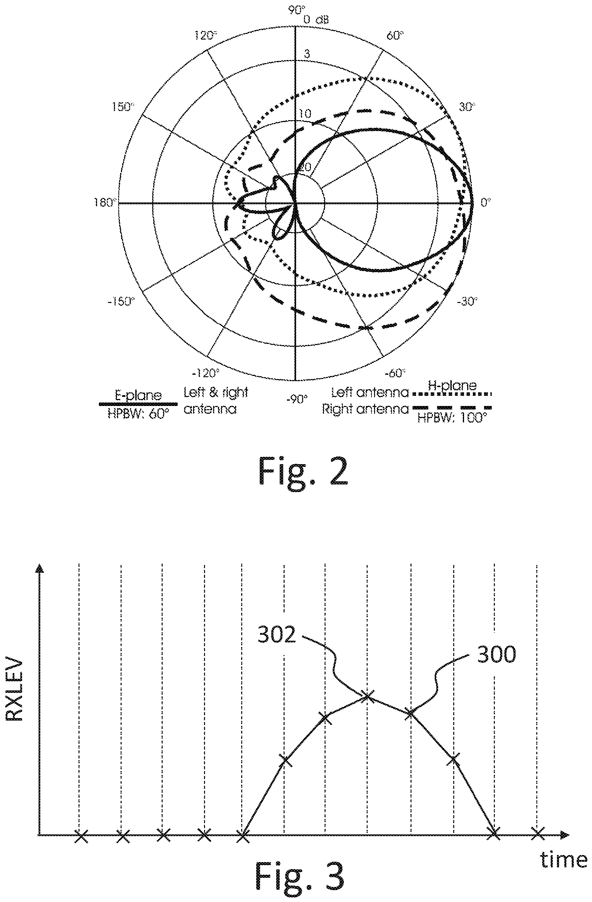

Figure 2 shows a typical radiation pattern of an exemplary transmitter suitable for use as a measurement beacon. The transmitter includes a left and a right antenna which together function as a directional antenna. Measurements are shown in decibels for the E-plane and H-plane polarisations. The transmitter emits radiation in a vertically polarised electric field, and it is observed that the electric field in the vertical plane exhibits a main lobe with a half power bandwidth of 60 degrees, along with some minor lobes in the reverse direction. The ratio of magnitudes of the major and minor lobes is around 15 dB, demonstrating high directivity in the direction of the major lobe.

In this example, the measurement beacon 106 is effectively a downlink only base station and the beacon signal beam conveys sufficient information for the mobile communication device 104 to measure the beacon signal beam and report the measurement of the beacon signal beam to the network components via the BTS 108. It is recommended that the beacon signal beam conveys a full BCCH with cell barring enabled, although a lesser subset (i.e. FB/SB including BSIC) could also be used.

GSM and other cellular protocols provide for a list of neighbour cells to be advertised from a serving base station. In the case of GSM, this is advertised in the System Information 5 (SI5) message, carried on a dedicated channel during a communication session between a mobile communications device and a BTS. ETSI specification GSM04.08 section 9.1.3.7 describes the process for encoding an SI5 message, and section 3.4.1 describes when it should be present. When a dedicated channel is established between the mobile communications device and the BTS, the mobile communications device will attempt to measure all of the cells which are reselection candidates from the SI5 message, and return these values to the serving BTS in a Measurement report. This process is described in GSM04.08 section 3.4.1.2, and GSM05.08, section 8. The pertinent features for this invention are the recovery of the absolute radio frequency channel number (ARFCN), received signal level (RXLEV) and/or received signal strength indicator (RSSI), received signal quality (RXQUAL), and base station identification code (BSIC). In the example of Figure 1, the operator of the network 107 populates the neighbouring cell list transmitted in the SI5 message by the BTS 108 with the ARFCN for the measurement beacon 106.

The device register 114 stores device identification information relating to the mobile communications device 104, along with other devices of interest to the operator of the system.) The device identification information may include any information which can be used to identify the devices of interest when interrogated by the network 107. The device identification information may relate to individual devices, or may alternatively relate to particular groups of devices, or devices having certain characteristics.

The device register 114 in this example is implemented as an independent home location register (HLR) of the network 107. The independent HLR functions analogously to a regular HLR of a PLMN, but only the devices of interest are registered with the independent HLR. The independent HLR stores subscription information including at minimum an International Mobile Subscriber Identity (IMSI) for each of the devices of interest. The timing entity 116 is able to determine whether a given mobile communications device is a device of interest based on whether the mobile communications device is registered with the independent HLR. It will be appreciated that, in other examples, the device register 114 could be implemented as an additional component to an HLR of the network 107.

As will be explained in more detail hereinafter, the timing entity 116 processes measurement reports received from the mobile communications device 104. This can be achieved be extensions from the BSC 110 to forward radio measurement to the timing entity 116. To a person skilled in the art, there are several ways to achieve this including proprietary or standards compliant messaging, and it would even be possible to process the measurement reports inside the BSC 110. Although the timing entity 116 is shown as a separate component in Figure 1, the timing entity could be implemented as a component of the MSC 112.

When the vehicle 102 driving in the direction A on the roadway 122 enters the coverage area of the BTS 108, the mobile communications device 104 onboard the vehicle 102 undergoes cell reselection to the BTS 108. The transmission power, location, and configuration of the BTS 108 is such that the cell reselection is expected to have taken place by the time the mobile communications device 104 passes the measurement beacon 106, taking into account the expected speed of the vehicles driving on the roadway 122.

The BTS 108 has a different Location Area Code to the surrounding network, and therefore triggers a Location Update procedure according to when the mobile communications device 104 comes into range of the BTS 108. A dedicated channel is thereby established between the network 107 and the mobile communications device 104. The Location Update procedure forces the mobile communications device 104 to activate a bearer channel to the BTS 108 over which the network 107 can query the IMSI of the mobile communications device 104 (whereas in the case of a cell reselection within the same Location Area Code, the mobile communications device would not transmit the IMSI). The IMSI may then be compared with the list of IMSIs stored in the device register 114 to determine whether the mobile communications device 104 is a device of interest. Whilst the dedicated channel is held open, the mobile communications device 104 periodically measures signals from any neighbouring cell appearing in the neighbouring cell list of the BTS 108, including the measurement beacon 106, and transmits Measurement reports to the network 107. The 3GPP standards define the Measurement reporting period as 480ms, and also set requirements on neighbour cell detection and measurement frequency and accuracy. The BTS 108 is configured such that the dedicated channel is held connected for a sufficient amount of time for the mobile communications device 104 to pass through the beacon signal beam transmitted by the measurement beacon 106. The maximum duration of a dedicated channel is subject to protocol stack guard timers and cannot be indefinite without signalling progress being made, but can be extended to 12 seconds without problem.

The above approach of using the Location Update procedure does not require any changes to the infrastructure of any neighbouring PLMN to the network 107, although it may be advantageous for neighbouring base stations preferentially to handover mobile communication devices to the BTS 108. In the present example, the mobile communications device 104 experiences a temporary loss of service when passing through the coverage region of the BTS 108, because the network 107 does not allow access to a PLMN. In other examples, the MSC 112 may be connected to a gateway device to allow communication with PLMNs. In some examples, the methods described herein may be implemented within a PLMN, for example through modifications to an MSC of the PLMN.

Figure 3 shows the variation of the RXLEV of the beacon signal beam transmitted by the measurement beacon 106 as reported by the mobile communications device 104, over the period in which the vehicle 102 drives along the roadway 122 past the measurement beacon 106. The dashed vertical lines represent times at which the mobile communications device 104 sends Measurement reports to the network 107, and the crosses represent the RXLEV measurements given in the Measurement reports. It is observed that the RXLEV measurements increase from zero, then exhibit a well-defined peak before dropping back to zero. The well-defined peak results from the beam form generated by the directional antenna of the measurement beacon 106. It is noted however, that in other examples a transmitter without a directional antenna may be capable of producing a suitable peak, depending on the power of the transmitter and the relative position of the transmitter and the roadway. A measurement beacon may for example have a picocell transmission range (less than 200m, for example in the range 50m-200m), ensuring that the beacon signal is only measured in the vicinity of the measurement beacon whilst ensuring that the measurement beacon 106 consumes relatively little power compared with a standard BTS. In other examples, higher or lower power transmitters may be used, depending on the range over which the transmitter needs to be detectable by a mobile communications device.

The timing entity 116 is arranged to determine a capture time in dependence on a Measurement report received from the mobile communications device 104 indicating a peak measurement of the beacon signal transmitted by the measurement beacon 106. The peak measurement may be a peak measurement of RXLEV, of RXQUAL, RSSI, or a combination of any of these. In an example, the timing entity 116 is arranged to maintain a dedicated channel with the mobile communications device for a long enough period of time for multiple Measurement reports to be received as the vehicle 102 passes the camera 118. The peak measurement may then be indicated by a first instance in which a Measurement report indicates a lower value than a previous Measurement report. This indicates that the mobile communications device 104 has passed the region of peak intensity of the beacon signal. In the example of Figure 3, the RXLEV measurement 300 is lower than the RXLEV measurement 302, indicating that the peak measurement has passed. The timing entity 116 may determine a capture time depending on the time at which the measurement 300 was made (as indicated by the corresponding Measurement report), or the time at which the corresponding Measurement report was received. For example, the capture time may be immediately after the receiving of that Measurement report, or a predetermined amount of time after the receiving of that Measurement report (or after the measurement was taken). An appropriate capture time depends on the relative positions of the measurement beacon 106 and the camera 118, and possibly on the typical speed at which vehicles drive on the roadway 122. Preferably, the capture time is not more than one or two seconds after the receiving of the relevant Measurement report, mitigating the possibility of errors due to changes in vehicle velocity. The capture time is determined such that an image captured by the camera 118 at the capture time contains the vehicle 102, and in particular the number plate of the vehicle 102. Although in the present example a dedicated channel is used to enable multiple Measurement reports to be received, in other examples multiple Measurement reports may be received over multiple channels or without the need for a dedicated channel to be established. Furthermore, although in this example the capture time is determined based on a first Measurement report indicating a lower value than a previous Measurement report, a different analysis may be employed to determine a peak measurement of a beacon signal from a sequence of measurement reports, for example by fitting a curve such as a polynomial curve or a best fit curve to a time series of received signal strength values indicated by the sequence of Measurement reports, and identifying the peak of the resulting curve. In a further example still, which is not part of the claimed invention, a capture time may be determined based on a Measurement report indicating a sole measurement of the beacon signal transmitted by a measurement beacon (for example where preceding and following Measurement reports do not indicate reception of the beacon signal), in which case such a measurement may be identified as a peak measurement. This method may for example be sufficiently precise for determining a capture time when used in conjunction with a low power and/or narrow beam measurement beacon.

In this example, the timing entity 116 uses the device identification information stored in the device register 114 to determine whether the mobile communications device 104 is a device of interest, and only proceeds with determining a capture time if it is determined that the mobile communications device 104 is a device of interest. In other examples, this step may be omitted and a capture time may be determined for any mobile communications device passing the measurement beacon 106 and capable of connecting to the network 107. In other examples still, any device not included in the device register 116 may be a device of interest.

The camera 118 is arranged to capture an image of the vehicle 102 at the determined capture time. As noted above, the captured image will include the vehicle 102 containing the mobile communications device 104. The image is suitable for use in identifying the vehicle 102. In this example, the camera 118 includes associated circuitry arranged to perform image processing to generate identification data for identifying the vehicle 102. More specifically, in this example the camera 118 is an ANPR camera with associated circuitry for determining a registration number from the number plate of the vehicle 102. In other examples, identification data may include other types of information for identifying a person or vehicle, instead of a registration number. For example, identification data may include a name or other details of a person based on facial recognition, as will be described with reference to a further example hereinafter. In other examples, identification data is not generated, and instead image data representing a person or vehicle is provided to a human user or another system for use in identifying the person or vehicle.

As mentioned above, the camera 118 is arranged to capture an image at the capture time determined by the timing entity 116. For example, the timing entity 116 may be arranged to trigger the camera 118 to capture the image at the determined capture time. For example, when the timing entity 116 receives a Measurement report indicating a peak measurement of the beacon signal by the mobile communications device 104, the timing entity 116 may send a signal to the camera 118 to trigger the capturing of the image. The timing entity 116 may send a signal to the camera 118 at the determined capture time, or alternatively may send a signal to the camera 118 in advance of the capture time, for example a fixed amount of before the capture time and/or indicating the determined capture time. In any of these cases, the capture time at which the camera 118 is activated is chosen to be when the vehicle 102 is positioned within the field of view of the camera 118.

In the example described above, the camera 118 captures images in response to receiving a signal from the timing entity 116. In an alternative arrangement, the camera 118 captures images continually, for example one or more images every few seconds, or every second, resulting in a stream of images. The frequency at which the images are captured is high enough to preclude the possibility of a vehicle driving along the roadway 122 past the camera 118 without being clearly visible in at least one of the captured images. In some examples, the captured images are stored, either locally or remotely to the camera 118, in association with data indicative of a time at which each image is captured, for example in the form of a respective timestamp. The timing entity 116 is arranged to match the determined capture time to a time at which one of the images is captured (for example within an acceptable margin of error). In this way, the timing entity 116 identifies an image containing the vehicle 102, and may initiate processing of the image to generate identification data as described above. Using this arrangement, it is not necessary to process all of the images in the captured stream, only those corresponding to a capture time determined by the timing entity.

In a further example, the processing circuitry associated with the camera 118 automatically processes all of the images within the captured stream of images, and stores identification data for at least some of the images (for example, those in which a vehicle is identified). Each instance of identification data is stored in association with data indicating a time at which the corresponding image was captured, and optionally in association with the corresponding image itself. The timing entity 116 is arranged to match the determined capture time to a time at which one of the images is captured (within predetermined error bounds). The timing entity 116 thereby identifies the image containing the vehicle 102, and retrieves the identification data associated with that image, optionally along with the image itself.

An example of a situation in which the system of Figure 1 may be used is where the roadway 122 is a toll road for which a fee is due each time a vehicle passes along the roadway 122. The user of the mobile communications device 104 may register for an account for the automatic payment of such fees. The automatic payment account may be associated with a payment method along with device identification information for identifying the mobile communications device 104 and vehicle identification information (such as a registration number) for identifying the vehicle 102. Preferably, only one account is associated with the vehicle 102 (though this is not essential). When the vehicle 102 containing the mobile communications device 104 drives past the measurement beacon 106, the mobile communications device 104 and the vehicle 102 are identified using the method described above. Because the vehicle 102 and the mobile communications device 104 are associated with the same automatic payment account, a payment is taken from that account and the vehicle 102 is allowed to continue on the toll road. By cross-checking the vehicle 102 and the mobile communications device 104, it is ensured that payment is only taken from the account associated with the vehicle 102, even if the vehicle 102 contains multiple devices associated with different payment accounts. In this way, the system provides an efficient means of taking toll payments, preferably without requiring the vehicle 102 to slow down.

In the example of in which the roadway 122 is a toll road, if a mobile communications device passes the measurement beacon 106 and it is determined that the mobile communications device is not registered with an automatic payment account, then the system may identify the vehicle containing that device, using the method described above, and if no automatic payment has been taken for the identified vehicle, then the driver of the identified vehicle may be required to pay the toll manually. For example, a traffic light or barrier may be activated to stop the identified vehicle at a payment terminal or toll booth, and/or the registration number or an image of the identified vehicle may be provided to a toll booth officer. Alternatively, if a vehicle is identified using the camera 118 but is not determined to contain a mobile communications device associated with an automatic payment account, then the driver of that vehicle may also be required to pay the toll manually.

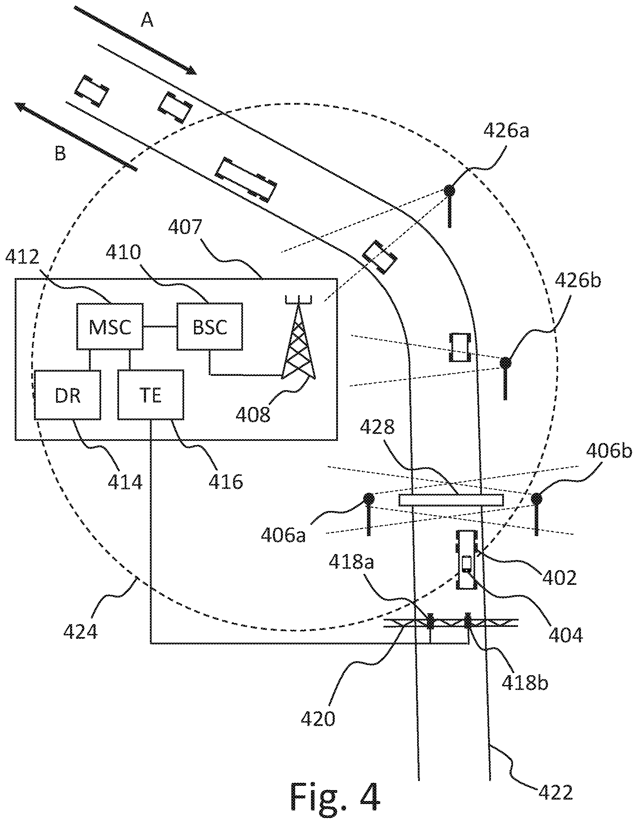

In the example of Figure 1, vehicles are only permitted to drive in one direction on the roadway 122 as indicated by the arrow A. Figure 4 shows an example of a system for identifying a vehicle 402 in dependence on a location of a mobile communications device 404 located within the vehicle 402. The system of Figure 4 has similar components to the system of Figure 1, and corresponding components in Figures 1 and 4 have reference signs sharing the same last two digits. The system of Figure 4 differs from the system of Figure 1 in that the roadway 422 of Figure 4 has two lanes, and traffic is permitted to travel in either direction A or B. In this example, two ANPR cameras 418a and 418b are provided for capturing images on respective different sides of the roadway 422. Both of the ANPR cameras 418a, 418b can identify vehicles driving towards or away based on front or rear number plates, and therefore the two ANPR cameras 418a, 418b are capable of identifying vehicles driving in either direction, on either side of the roadway 422. The roadway 422 includes a choke point, which in this example is a bridge 428 which vehicles cannot drive around and therefore must drive under. The ANPR cameras 418a, 418b are arranged to capture images of vehicles as they drive under the bridge 428.

The system of Figure 4 includes two measurement beacons 406a, 406b on opposite sides of the roadway 422 from one another and arranged to transmit beacon signal beams towards each other across the roadway 422, creating an overlap region of the two beacon signal beams under the bridge 428. In this example, the two measurement beacons 406a, 406b are substantially equidistant from the bridge 428, have similar or identical antenna characteristics, and operate in the same or similar frequency bands. This means that the beacon signals transmitted by the measurement beacons 406a, 406b, have similar beam forms, resulting in similar peaks being measured by the mobile communications device 404 passes the measurement beacons 406a, 406b. The ARFCN of both measurement beacons 406a, 406b are included in the neighbouring cell list in the SI5 message transmitted by the BTS 418.

In this example, the timing entity 416 is arranged to determine a capture time in dependence on a measurement report received from the mobile communications device 402 indicating peak measurements of both of the beacon signal beams transmitted by the measurement beacons 406a, 406b. In this way, the capture time will only be triggered by mobile communications devices passing through the overlap region, and will not be falsely triggered by mobile communications devices. This arrangement may be particularly advantageous if the system is deployed in a densely populated region, where there is a high likelihood of false triggering by mobile communications not passing through the relevant region. An overlap region can generally be created by two or more directional transmitters at different locations facing in different directions from one another.

In some examples, it is only desired to capture images of a person or vehicle travelling in a certain direction, for example in the direction A in the example of Figure 4. In order to achieve this, one or more further transmitters may be deployed in upstream and/or downstream positions with respect to the capture location and arranged to transmit further beacon signals. The timing entity may be arranged to determine the capture time further in dependence on measurement reports received from the mobile communications device indicating measurements of the beacon signals transmitted by the one or more further transmitters.

The system of Figure 4 includes two additional measurement beacons 426a, 426b deployed upstream from the choke point 428 with respect to the direction A, and arranged to transmit beacon signal beams across the roadway 422. The ARFCN of the further measurement beacons 426a, 426b are included in the neighbouring cell list in the SI5 message transmitted by the BTS 418. Although all of the measurement beacons 406, 426a, 426b in this example have directional antennae for transmitting beacon signal beams, in other examples a measurement beacon may transmit an isotropic beacon signal, for example at a low power compared with the power of the BTS 418 so that a mobile communications device will only report measurements of the measurement beacon when located in its close vicinity.

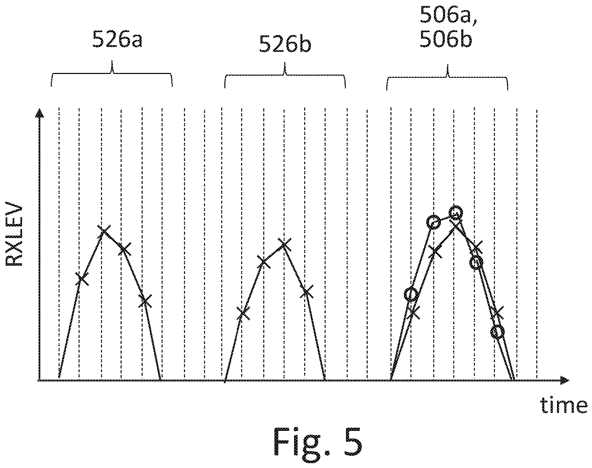

Once the mobile communications device 402 is camping on the target cell, the mobile communication device 402 sends regular measurement reports to the network 407 via the BTS 408. Figure 5 shows an illustrative graph of RXLEV measurements from the mobile communications device 402. A respective peak is observed corresponding to each of the measurement beacons 406, 426. In this example, cell reselection has already taken place by the time the vehicle 404 drives past the measurement beacon 426a, and therefore Measurement reports received from the mobile communications device 402 indicate RXLEV measurements for the measurement beacon 426a, giving rise to a first peak 526a. A second peak 526b is then observed, corresponding to RXLEV measurements for the measurement beacon 526b. Finally, peaks 506a, 506b are observed simultaneously, corresponding to RXLEV measurements for the measurement beacons 506a, 506b. In this example, the capture time is determined only when peaks in both measurement beacons 406a, 406b are detected, indicating a mobile communications device passing through the overlap region of the corresponding beacon signals. Although in this example the peaks are clearly separated, the peaks may overlap where the measurement beacons 406, 426 are closer together. There is no problem with resolving the peaks from one another, as the peaks are associated with different ARFCN values and therefore appear in separate fields within the Measurement reports.

In this example, the timing entity 416 only determines a capture time based on peak measurements for the measurement beacons 506a, 506b if a peak has already been observed for at least one of the upstream measurement beacons 526a, 526b. If a vehicle is travelling in the direction B, the peaks for the measurement beacons 506a, 506b will be observed after the peaks for the measurement beacons 526a, 526b.

In order for the timing entity 416 to filter out mobile communications device in dependence on the direction of travel, the timing entity 426 may temporarily store device identification information for mobile communications devices camping on the cell of the network 407. The timing entity 416 may further store data indicating when a peak measurement is detected for either of the upstream measurement beacons 426a, 426b, for example in the form of a binary flag or timing information. When the timing entity 416 determines a capture time, either to trigger the cameras 418a, 418b or to identify images captured continually by the cameras 418a, 418b, the determining may be made dependent on the stored data indicating peak measurements of the upstream measurement beacons 426a, 426b. In examples where the timing entity 416 is arranged to trigger the cameras 418a, 418b, data indicating peak measurements for the upstream measurement beacons 426a, 426b may be used to filter mobile communications devices, such that only measurements from mobile communications device travelling in the direction A are analysed. In this way, processing demands and latency may be reduced. Alternatively, the timing entity 416 may be arranged to determine a capture time irrespective of the direction in which a vehicle of interest is travelling, with the direction of travel being used to assist with identifying the vehicle of interest. For example, two vehicles may simultaneously pass through the choke point 428 in different directions, resulting in both vehicles appearing in respective images captured by the cameras 418a, 418b at a determined capture time. The direction determined using the measurement beacons 426a, 426b may then be used to determine which of the two vehicles contains the mobile communications device.

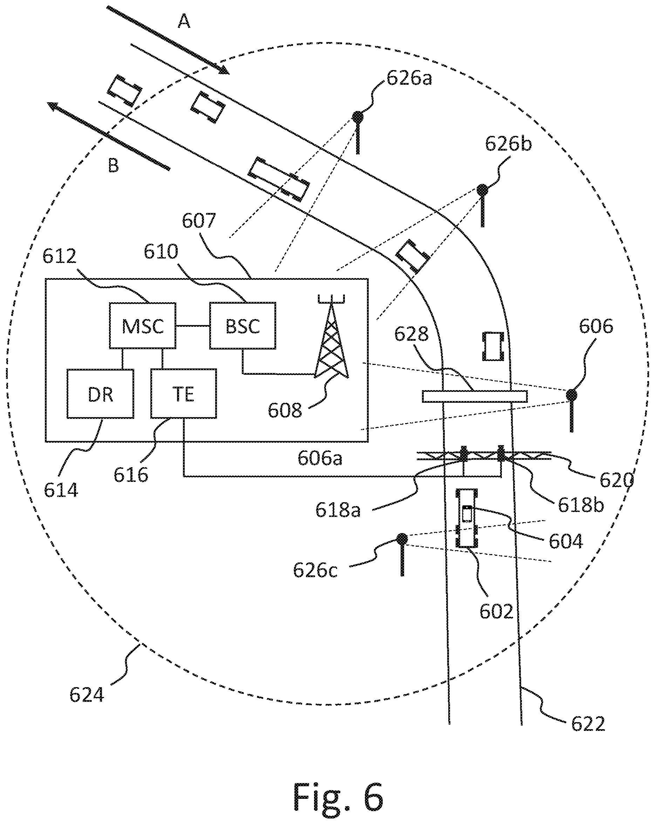

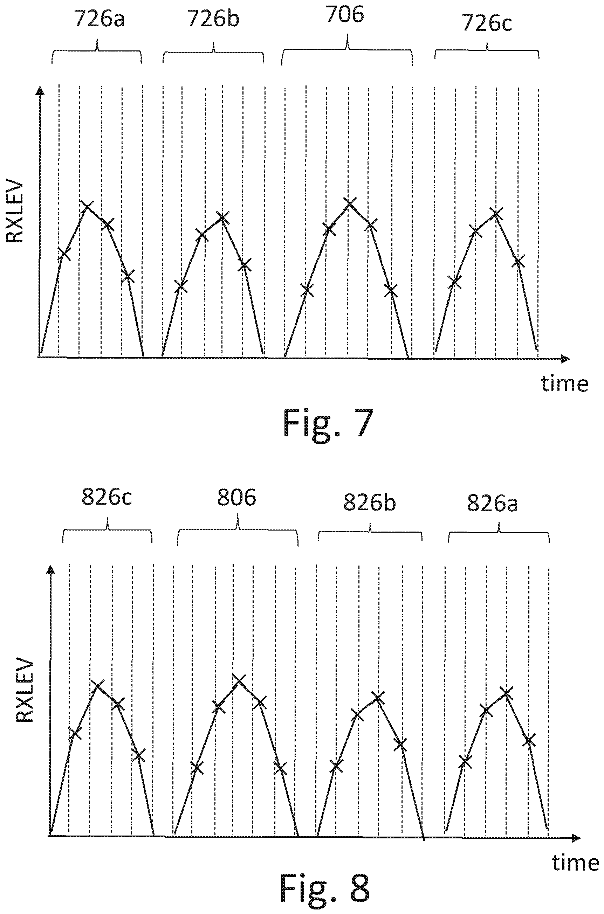

Figure 6 shows a further example of a system with similar components to the system of Figure 4. Corresponding components in Figures 4 and 6 have reference signs sharing the same last two digits. Unlike the system of Figure 4, the system of Figure 6 includes only a single measurement beacon 606 arranged to transmit a beacon signal beam across the choke point 628. The system of Figure 6 includes a further measurement beacon 626c deployed downstream from the choke point 628 with respect to the direction A, and upstream from the choke point 628 with respect to the direction B. Figures 7 and 8 respectively show illustrative graphs of RXLEV measurements from mobile communications devices travelling in the directions A and B. The peaks 706, 726a, 726b, 726c in Figure 7 correspond to measurements of the measurement beacons 606, 626a, 626b, 626c respectively. The peaks 806, 826a, 826b, 826c in Figure 8 correspond to measurements of the measurement beacons 606, 626a, 626b, 626c respectively. The ordering of the peaks can be used to determine the direction of travel, which then can be used to filter mobile communications devices as described above with reference to Figure 4.

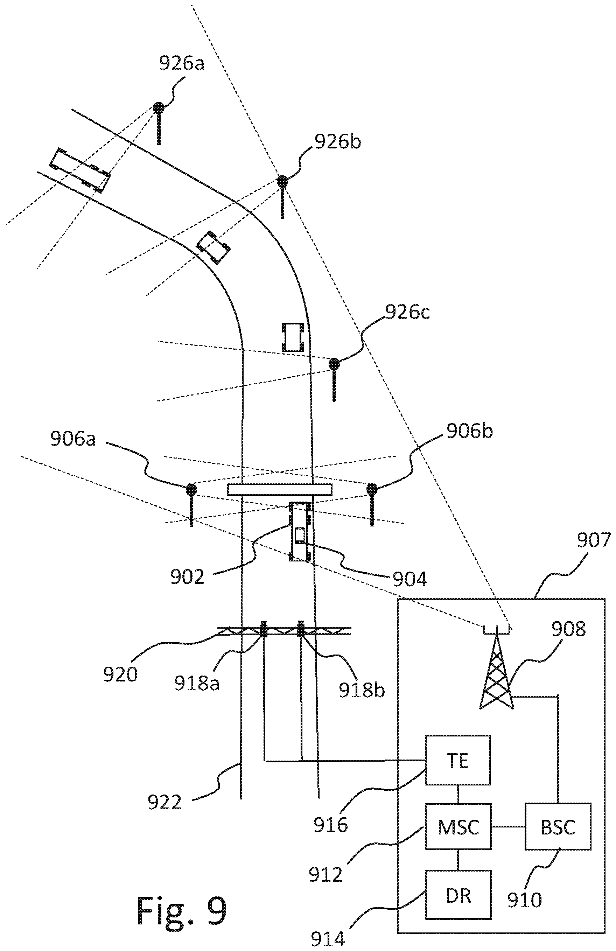

Figure 9 shows a further example of a system with similar components to the systems of Figure 4. Corresponding components in Figures 4 and 6 have reference signs sharing the same last two digits. The system of Figure 9 differs from the system of Figure 4 in that the BTS 908 includes a directional antenna and therefore the region of coverage of the BTS 908 is directed rather than isotropic. Advantageously, this arrangement limits the region in which mobile communications devices will perform a cell reselection to the network 907, reducing the signalling load and processing of Measurement reports received from devices not located in the relevant region containing the measurement beacons 906, 926.

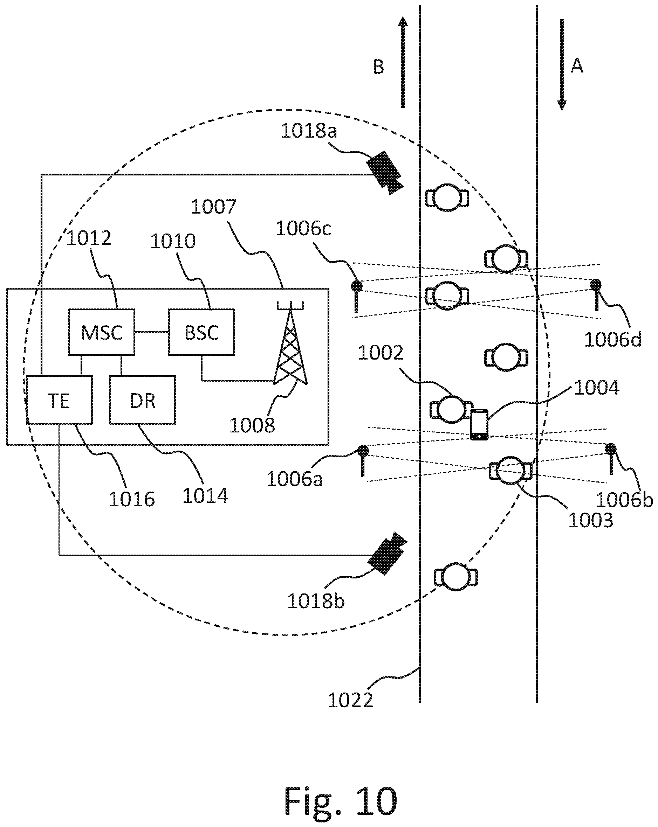

Figure 10 shows a system for identifying a person 1002 in dependence on a location of a mobile communications device 1004 carried by the person 1002. Corresponding components in Figures 1 and 10 have reference signs sharing the same last two digits. In this example, the system is used to identify people walking on a walkway 1022, which may for example be an indoor walkway in an airport or private venue, or may be a footpath or pavement. The system includes four measurement beacons 1006a, 1006b, 1006c, 1006d arranged in two pairs, with the measurement beacons 1006 in each pair having directional antenna facing one another to create a respective overlap region for each pair. The system includes two CCTV cameras 1018a, 1018b facing in substantially opposite directions and having associated circuitry for performing facial recognition. Each of the CCTV cameras 1018a, 1018b is arranged to capture images of faces of people passing one of the pairs of measurement beacons 1006. When the person 1002 passes the first pair of measurement beacons 1006a, 1006b, if the system determines that the mobile communications device 1004 previously passed through the second pair of measurement beacons 1006c, 1006d, and therefore that the person 1002 is travelling in the direction A and is expecting to be facing the camera 1018b. Alternatively, if the system determines that the mobile communications device 1004 has not previously passed through the second pair of measurement beacons 1006c, 1006d, the person 1002 is travelling in direction B and is expecting to be facing away from the camera 1018b. In that case, an image of the person 1002 will be captured instead by the camera 1018a when the person passes the second pair of measurement beacons 1006c, 1006d. In this way, even if the person 1002 and another person 1003 pass the first pair of measurement beacons 1006a, 1006b at the same time and in opposite directions, the system can determine which person is holding the mobile communications device 1004.

The system of Figure 10 may be used to automatically verify the identity of attendees to an event such as a concert or live sports event. In that case, attendees may register for a ticket to the event by providing device identification information and a photograph of his or her face. When the person enters the event venue, along the walkway 1022, then the system attempts to identify the person using the methods described herein. If the person is identified, and the identity of the person matches the registered device, then the person may be allowed to enter the venue (for example, the person may be allowed to pass freely along the walkway 1022 to the venue, an automated barrier may be opened, and/or an image of the person may be provided to a member of venue staff indicating that the person is permitted to enter the venue). If the person cannot be identified, or is identified but the identity of the person does not match the registered device, then the person may not be allowed to enter the venue. For example, a barrier may be closed and/or an image of the person may be provided to a member of venue staff indicating that a manual check should be performed. Finally, if a person passes along the walkway 1022 with an unregistered mobile communications device, then the person may not be allowed to enter the venue without a manual check being performed.

The description herein describes this technology being used in a GSM network, however, the person skilled in the art will know that it can be applied to other Radio Access Technologies (RATs). For instance, to use this method in UMTS, the measurement beacon would have a distinct UARFCN/PSC combination, and in LTE it would have a distinct EARFCN/PCI combination. Additionally, it is possible in more modern RATs to prioritise certain cells using hierarchy such as HCS. This allows the measurement beacons to be measured first if necessary. It is also possible in higher technology RATs to force a mobile communications device to measure a lower technology RAT cell, thus it would be possible to use GSM beacons in an LTE or UMTS network under most circumstances.

Although in the embodiments described above, measurement data is forwarded by the BSC to the timing entity for analysis, in other examples measurement data may be retrieved or derived, using suitable software and hardware, from any practical interface within the network that has access to the measurement data, for example the Abis interface in GSM or the radio resource control (RRC) sublayer of the UMTS radio interface.

Although in the examples described above the device identification information is specified as an IMSI, any suitable identifier could be used, for instance a Subscription Permanent Identifier (SUPI) in 5G, or a Mobile Subscriber Integrated Services Digital Network (MSISDN) derived from a HLR lookup of a TMSI, IMSI or SUPI.

The above embodiments are to be understood as illustrative examples of the invention. Further embodiments of the invention are envisaged. For example, although the above embodiments may be used to identify an unknown person or vehicle associated with a mobile communications device, the same technology could be utilised to identify an unknown mobile communications device associated with a person or vehicle appearing in an image captured using a CCTV or ANPR camera.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed.

## Claims

1. A system for use in identifying a person or vehicle (102, 402, 602, 902) carrying a mobile communications device (104, 404, 604, 904), the system comprising:
a transmitter (106, 406, 606, 906) arranged to transmit a beacon signal for reception by the mobile communications device;
a timing entity (116, 416, 616, 916) communicable with the mobile communications device via a base station apparatus (108, 408, 608, 908), the timing entity being arranged to:
receive a plurality of measurement reports from the mobile communications device, each received measurement report indicating a received signal strength of the beacon signal by the mobile communications device; and
determine a capture time in dependence on the plurality of measurement reports indicating a relative peak measurement, among the plurality of measurement reports, of the beacon signal by the mobile communications device; and
a camera (118, 416, 616, 916) arranged to capture an image at the determined capture time, for use in identifying the person or vehicle,
wherein the camera is positioned relative to the transmitter such that the image captured at the determined capture time contains the person or vehicle.

2. The system of claim 1, further comprising an image processor arranged to process the captured image to generate identification data for identifying the person or vehicle.

3. The system of claim 2, wherein:
said identification data is first identification data;
the camera is arranged to capture a stream of images each having a respective time stamp;
the image processor is arranged to:
generate respective identification data for at least some of the images in the stream of images; and
store the respective identification data for said at least some of the images in association with the respective time stamps of those image; and
the system is arranged to identify the first identification data from the stored identification data by matching the determined capture time with one of the stored time stamps.

4. The system of claim 1 or claim 2, wherein:
the image is a first image;
the camera is arranged to capture a stream of images each having a respective time stamp; and
the timing entity is arranged to identify the first image from the captured stream of images by matching the determined capture time with a time stamp of one of the images within the captured stream of images.

5. The system of claim 1 or claim 2, wherein the timing entity is arranged to trigger the camera to capture the image in dependence on the measurement report.

6. The system of any preceding claim, wherein the transmitter is a simplex device.

7. The system of any preceding claim, wherein:
the plurality of measurement reports comprises a first measurement report; and
the first measurement report indicates a lower received signal strength of the beacon signal than a previous measurement report of the plurality of measurement reports, thereby indicating that the relative peak measurement of the beacon signal by the mobile communication device has passed.

8. The system of any preceding claim, wherein the timing entity is arranged to maintain a dedicated channel with the mobile communications device, whereby to enable reception of the plurality of measurement reports.

9. The system of any preceding claim, wherein:
the transmitter comprises a directional antenna arranged to transmit said beacon signal as a beacon signal beam.

10. The system of claim 9, wherein the transmitter is a first transmitter (406a, 906a) in a first location comprising a first directional antenna arranged to transmit a first beacon signal beam in a first direction, the system further comprising a second transmitter (406b, 906b) at a second location different from the first location and comprising a second directional antenna arranged to transmit a second beacon signal beam in a second direction different from the first direction, thereby to generate an overlap of the first and second beacon signal beams,
wherein the timing entity is arranged to determine the capture time in dependence on the plurality of measurement reports received from the mobile communications device indicating peak measurements of the first beacon signal beam and the second beacon signal beam by the mobile communications device.

11. The system of any preceding claim, arranged to store device identification information relating to one or more devices of interest, wherein the timing entity is arranged to:
determine, using the stored device identification information, that the mobile communications device is a device of interest; and
determine the capture time further in dependence on said determination that the mobile communications device is a device of interest.

12. A method of identifying a person or vehicle (102, 402, 602, 902) associated with a mobile communications device (104, 404, 604, 904), the method comprising:
transmitting, by a transmitter (106, 406, 606, 906), a beacon signal for reception by the mobile communications device;
receiving a plurality of measurement reports from the mobile communications device, each received measurement report indicating a received signal strength of the beacon signal by the mobile communications device;
determining a capture time in dependence on the plurality of measurement reports indicating a relative peak measurement, among the plurality of measurement reports, of the beacon signal by the mobile communications device; and
capturing, by a camera (118, 416, 616, 916), an image at the determined capture time, for use in identifying the person or vehicle,
wherein the camera is positioned relative to the transmitter such that the image captured at the determined capture time contains the person or vehicle.

13. The method of claim 12, further comprising processing the captured image to generate identification data for identifying the person or vehicle.

14. The method of claim 12 or claim 13, wherein:
the plurality of measurement reports comprises a first measurement report; and
the first measurement report indicates a lower received signal strength of the beacon signal than a previous measurement report of the plurality of measurement reports, thereby indicating that the relative peak measurement of the beacon signal by the mobile communication device has passed.

15. The method of any one of claims 12 to 14, comprising maintaining a dedicated channel with the mobile communications device, whereby to enable reception of the plurality of measurement reports from the mobile communications device.

## Patentansprüche

1. System zur Verwendung bei einem Identifizieren einer Person oder eines Fahrzeugs (102, 402, 602, 902), die/das eine mobile Kommunikationsvorrichtung (104, 404, 604, 904) mit sich führt, das System umfassend:
einen Sender (106, 406, 606, 906), der eingerichtet ist, um ein Bakensignal für einen Empfang durch die mobile Kommunikationsvorrichtung zu senden;
eine Zeitmesseinheit (116, 416, 616, 916), die über eine Basisstationseinrichtung (108, 408, 608, 908) mit der mobilen Kommunikationsvorrichtung kommunizieren kann, wobei die Zeitmesseinheit eingerichtet ist zum:
Empfangen einer Vielzahl von Messberichten von der mobilen Kommunikationsvorrichtung, wobei jeder empfangene Messbericht eine empfangene Signalstärke des Bakensignals durch die mobile Kommunikationsvorrichtung angibt; und
Bestimmen einer Aufnahmezeit in Abhängigkeit von der Vielzahl von Messberichten, die eine relative Spitzenmessung, unter der Vielzahl von Messberichten, des Bakensignals durch die mobile Kommunikationsvorrichtung angibt; und
eine Kamera (118, 416, 616, 916), die eingerichtet ist, um zu dem bestimmten Aufnahmezeitpunkt ein Bild aufzunehmen, zur Verwendung bei dem Identifizieren der Person oder des Fahrzeugs,
wobei die Kamera relativ zu dem Sender derart positioniert ist, dass das Bild, das zu dem bestimmen Aufnahmezeitpunkt aufgenommen wird, die Person oder das Fahrzeug enthält.

2. System nach Anspruch 1, ferner umfassend einen Bildprozessor, der eingerichtet ist, um das aufgenommene Bild zu verarbeiten, um Identifikationsdaten zum Identifizieren der Person oder des Fahrzeugs zu generieren.

3. System nach Anspruch 2, wobei:
die Identifikationsdaten erste Identifikationsdaten sind;
die Kamera eingerichtet ist, um einen Strom von Bildern aufzunehmen, die jeweils einen entsprechenden Zeitstempel aufweisen;
wobei der Bildprozessor eingerichtet ist zum:
Generieren entsprechender Identifikationsdaten für mindestens einige der Bilder in dem Strom von Bildern; und
Speichern der jeweiligen Identifikationsdaten für mindestens einige der Bilder in Verknüpfung mit den jeweiligen Zeitstempeln dieser Bilder; und
das System eingerichtet ist, um die ersten Identifikationsdaten aus den gespeicherten Identifikationsdaten durch Abgleichen des bestimmten Aufnahmezeitpunkts mit einem der gespeicherten Zeitstempel zu identifizieren.

4. System nach Anspruch 1 oder 2, wobei:
das Bild ein erstes Bild ist;
die Kamera eingerichtet ist, um einen Strom von Bildern aufzunehmen, die jeweils einen entsprechenden Zeitstempel aufweisen; und
die Zeitmesseinheit eingerichtet ist, um das erste Bild aus dem aufgenommen Strom von Bildern durch Abgleichen der bestimmten Aufnahmezeit mit einem Zeitstempel eines der Bilder innerhalb des aufgenommenen Stroms von Bildern zu identifizieren.

5. System nach Anspruch 1 oder 2, wobei die Zeitmesseinheit eingerichtet ist, um die Kamera auszulösen, um das Bild in Abhängigkeit von dem Messbericht aufzunehmen.

6. System nach einem der vorstehenden Ansprüche, wobei der Sender eine Simplex-Vorrichtung ist.

7. System nach einem der vorstehenden Ansprüche, wobei:
die Vielzahl von Messberichten einen ersten Messbericht umfasst; und
der erste Messbericht eine geringere Empfangssignalstärke des Bakensignals als ein vorheriger Messbericht der Vielzahl von Messberichten angibt, wobei er dadurch angibt, dass die relative Spitzenmessung des Bakensignals durch die mobile Kommunikationsvorrichtung überschritten wurde.

8. System nach einem der vorstehenden Ansprüche, wobei die Zeitmesseinheit eingerichtet ist, um einen dedizierten Kanal mit der mobilen Kommunikationsvorrichtung aufrechtzuerhalten, wodurch ein Empfang der Vielzahl von Messberichten ermöglicht wird.

9. System nach einem der vorstehenden Ansprüche, wobei:
der Sender eine Richtantenne umfasst, die eingerichtet ist, um das Bakensignal als einen Bakensignalstrahl zu senden.

10. System nach Anspruch 9, wobei der Sender ein erster Sender (406a, 906a) an einem ersten Ort ist, umfassend eine erste Richtantenne, die eingerichtet ist, um einen ersten Bakensignalstrahl in eine erste Richtung zu senden, das System ferner umfassend einen zweiten Sender (406b, 906b) an einem zweiten Ort, der sich von dem ersten Ort unterscheidet, und umfassend eine zweite Richtantenne, die eingerichtet ist, um einen zweiten Bakensignalstrahl in eine zweite Richtung zu senden, die sich von der ersten Richtung unterscheidet, wobei dadurch eine Überlappung des ersten und des zweiten Bakensignalstrahls generiert wird,
wobei die Zeitmesseinheit eingerichtet ist, um die Aufnahmezeit in Abhängigkeit von der Vielzahl von Messberichten zu bestimmen, die von der mobilen Kommunikationsvorrichtung empfangen werden, die Spitzenmessungen des ersten Bakensignalstrahls und des zweiten Bakensignalstrahls durch die mobile Kommunikationsvorrichtung angeben.

11. System eines der vorstehenden Ansprüche, das eingerichtet ist, um Vorrichtungsidentifikationsinformationen bezüglich einer oder mehreren Vorrichtungen von Interesse zu speichern, wobei die Zeitmesseinheit eingerichtet ist zum:
Bestimmen, unter Verwendung der gespeicherten Vorrichtungsidentifikationsinformationen, dass die mobile Kommunikationsvorrichtung eine Vorrichtung von Interesse ist; und
Bestimmen des Aufnahmezeitpunkts ferner in Abhängigkeit von der Bestimmung, dass die mobile Kommunikationsvorrichtung eine Vorrichtung von Interesse ist.

12. Verfahren zum Identifizieren einer Person oder eines Fahrzeugs (102, 402, 602, 902), die/das mit einer mobilen Kommunikationsvorrichtung (104, 404, 604, 904) verknüpft ist, das Verfahren umfassend:
Senden, durch einen Sender (106, 406, 606, 906), eines Bakensignals für den Empfang durch die mobile Kommunikationsvorrichtung;
Empfangen einer Vielzahl von Messberichten von der mobilen Kommunikationsvorrichtung, wobei jeder empfangene Messbericht eine empfangene Signalstärke des Bakensignals durch die mobile Kommunikationsvorrichtung angibt;
Bestimmen einer Aufnahmezeit in Abhängigkeit von der Vielzahl von Messberichten, die eine relative Spitzenmessung, unter der Vielzahl von Messberichten, des Bakensignals durch die mobile Kommunikationsvorrichtung angibt; und
Aufnehmen, durch eine Kamera (118, 416, 616, 916), eines Bilds zu dem bestimmten Aufnahmezeitpunkt, zur Verwendung bei dem Identifizieren der Person oder des Fahrzeugs,
wobei die Kamera relativ zu dem Sender derart positioniert ist, dass das Bild, das zu dem bestimmen Aufnahmezeitpunkt aufgenommen wird, die Person oder das Fahrzeug enthält.

13. Verfahren nach Anspruch 12, ferner umfassend das Verarbeiten des aufgenommenen Bilds, um Identifikationsdaten zum Identifizieren der Person oder des Fahrzeugs zu generieren.

14. Verfahren nach Anspruch 12 oder 13, wobei:
die Vielzahl von Messberichten einen ersten Messbericht umfasst; und
der erste Messbericht eine geringere Empfangssignalstärke des Bakensignals als ein vorheriger Messbericht der Vielzahl von Messberichten angibt, wobei er dadurch angibt, dass die relative Spitzenmessung des Bakensignals durch die mobile Kommunikationsvorrichtung überschritten wurde.

15. Verfahren nach einem der Ansprüche 12 bis 14, umfassend das Aufrechterhalten eines dedizierten Kanals mit der mobilen Kommunikationsvorrichtung, wodurch der Empfang der Vielzahl von Messberichten von der mobilen Kommunikationsvorrichtung ermöglicht wird.

## Revendications

1. Système à utiliser pour l'identification d'une personne ou d'un véhicule (102, 402, 602, 902) portant un dispositif de communications mobile (104, 404, 604, 904), le système comprenant :
un émetteur (106, 406, 606, 906) agencé pour émettre un signal de balise destiné à être reçu par le dispositif de communications mobile ;
une entité de synchronisation (116, 416, 616, 916) pouvant communiquer avec le dispositif de communications mobile par l'intermédiaire d'un appareil de station de base (108, 408, 608, 908), l'entité de synchronisation étant agencée pour :
recevoir une pluralité de rapports de mesure du dispositif de communications mobile, chaque rapport de mesure reçu indiquant une intensité de signal du signal de balise reçu par le dispositif de communications mobile ; et
déterminer un moment de capture en fonction de la pluralité de rapports de mesure indiquant une mesure de pic relative, parmi la pluralité de rapports de mesure, du signal de balise par le dispositif de communications mobile ; et
une caméra (118, 416, 616, 916) agencée pour capturer une image à l'instant de capture déterminé, afin de permettre l'identification de la personne ou du véhicule,
dans lequel la caméra est positionnée par rapport à l'émetteur de manière à ce que l'image capturée à l'instant de capture déterminé contienne la personne ou le véhicule.

2. Système selon la revendication 1 comprenant en outre un processeur d'images agencé pour traiter l'image capturée afin de générer des données d'identification permettant d'identifier la personne ou le véhicule.

3. Système selon la revendication 2, dans lequel :
lesdites données d'identification sont de premières données d'identification ;
la caméra est agencée pour capturer un flux d'images ayant chacune un horodatage respectif ;
le processeur d'image est agencé pour :
générer des données d'identification respectives pour au moins certaines des images du flux d'images ; et
stocker les données d'identification respectives pour ladite au moins une partie des images en association avec les horodatages respectifs de ces images ; et
le système est agencé pour identifier les premières données d'identification à partir des données d'identification stockées en faisant correspondre l'instant de capture déterminé avec l'un des horodateurs stockés.

4. Procédé selon la revendication 1 ou la revendication 2, dans lequel :
l'image est une première image ;
la caméra est agencée pour capturer un flux d'images ayant chacune un horodatage respectif ; et
l'entité de synchronisation est agencée pour identifier la première image du flux d'images capturées en faisant correspondre l'instant de capture déterminé avec l'horodatage de l'une des images du flux d'images capturées.

5. Système selon la revendication 1 ou la revendication 2, dans lequel l'entité de synchronisation est agencée pour déclencher la caméra afin de capturer l'image en fonction du rapport de mesure.

6. Système selon l'une quelconque revendication précédente, dans lequel l'émetteur est un dispositif simplex.

7. Système selon l'une quelconque revendication précédente, dans lequel :
la pluralité de rapports de mesure comprend un premier rapport de mesure ; et
le premier rapport de mesure indique une intensité de signal reçu du signal de balise inférieure à celle d'un rapport de mesure précédent de la pluralité de rapports de mesure, indiquant ainsi que le pic de mesure relatif du signal de balise par le dispositif de communication mobile est passé.

8. Système selon l'une quelconque revendication précédente, dans lequel l'entité de synchronisation est agencée pour maintenir un canal dédié avec le dispositif de communications mobile, afin de permettre la réception de la pluralité de rapports de mesure.

9. Système selon l'une quelconque revendication précédente, dans lequel :
l'émetteur comprend une antenne directionnelle agencée pour émettre ledit signal de balise sous la forme d'un faisceau de signaux de balise.

10. Système selon la revendication 9, dans lequel l'émetteur est un premier émetteur (406a, 906a) dans un premier emplacement comprenant une première antenne directionnelle agencée pour émettre un premier faisceau de signaux de balise dans une première direction, le système comprenant en outre un second émetteur (406b, 906b) dans un second emplacement différent du premier emplacement et comprenant une seconde antenne directionnelle agencée pour émettre un second faisceau de signaux de balise dans une seconde direction différente de la première direction, afin de générer un chevauchement des premier et second faisceaux de signaux de balise,
dans lequel l'entité de synchronisation est agencée pour déterminer l'instant de capture en fonction de la pluralité de rapports de mesure reçus du dispositif de communications mobile indiquant des mesures de pic du premier faisceau de signaux de balise et du second faisceau de signaux de balise par le dispositif de communications mobile.

11. Système selon l'une quelconque revendication précédente, agencé pour stocker des informations d'identification de dispositif relatives à un ou des dispositifs d'intérêt, dans lequel l'entité de synchronisation est agencée pour :
déterminer, à l'aide des informations d'identification de dispositif stocké, que le dispositif de communications mobile est un dispositif d'intérêt ; et
déterminer l'instant de capture en fonction de ladite détermination que le dispositif de communications mobile est un dispositif d'intérêt.

12. Procédé d'identification d'une personne ou d'un véhicule (102, 402, 602, 902) associé à un dispositif de communications mobile (104, 404, 604, 904), le procédé comprenant :
l'émission, par un émetteur (106, 406, 606, 906), d'un signal de balise destiné à être reçu par le dispositif de communications mobile ;
la réception d'une pluralité de rapports de mesure du dispositif de communications mobile, chaque rapport de mesure reçu indiquant une intensité de signal du signal de balise reçu par le dispositif de communications mobile ;
la détermination d'un instant de capture en fonction de la pluralité de rapports de mesure indiquant une mesure de pic relative, parmi la pluralité de rapports de mesure, du signal de balise par le dispositif de communications mobile ; et
la capture, par une caméra (118, 416, 616, 916), d'une image à l'instant déterminé de la capture, en vue de l'identification de la personne ou du véhicule,
dans lequel la caméra est positionnée par rapport à l'émetteur de manière à ce que l'image capturée à l'instant de capture déterminé contienne la personne ou le véhicule.

13. Procédé selon la revendication 12, comprenant en outre le traitement de l'image capturée pour générer des données d'identification permettant d'identifier la personne ou le véhicule.

14. Procédé selon la revendication 12 ou la revendication 13, dans lequel :
la pluralité de rapports de mesure comprend un premier rapport de mesure ; et
le premier rapport de mesure indique une intensité de signal reçu du signal de balise inférieure à celle d'un rapport de mesure précédent de la pluralité de rapports de mesure, indiquant ainsi que la mesure de pic relatif du signal de balise par le dispositif de communications mobile est passée.

15. Procédé selon l'une quelconque des revendications 12 à 14, comprenant le maintien d'un canal dédié avec le dispositif de communications mobile, afin de permettre la réception de la pluralité de rapports de mesure en provenance du dispositif de communications mobile.
